(19) Europäisches Patentamt
European Patent Office
Office européen des brevets

(11) **EP 4 357 494 A1**

(12) **EUROPEAN PATENT APPLICATION**
published in accordance with Art. 153(4) EPC

(43) Date of publication:
**24.04.2024 Bulletin 2024/17**

(21) Application number: **22824175.8**

(22) Date of filing: **14.06.2022**

(51) International Patent Classification (IPC):
*D01F 1/04* (2006.01)          *D01F 1/06* (2006.01)
*D01F 1/10* (2006.01)          *D01F 6/90* (2006.01)

(52) Cooperative Patent Classification (CPC):
**D01F 1/04; D01F 1/06; D01F 1/10; D01F 6/90**

(86) International application number:
**PCT/CN2022/098534**

(87) International publication number:
**WO 2022/262696 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2021 CN 202110658132**

(71) Applicant: **Toray Industries, Inc.
Tokyo 103-8666 (JP)**

(72) Inventors:
• **XU, Lihua
Nantong, Jiangsu 226009 (CN)**
• **FAN, Zhiheng
Nantong, Jiangsu 226009 (CN)**
• **NI, Chunjian
Nantong, Jiangsu 226009 (CN)**
• **SHIGETA, Masato
Hyogo 6700966 (JP)**

(74) Representative: **Mewburn Ellis LLP
Aurora Building
Counterslip
Bristol BS1 6BX (GB)**

(54) **LIQUID COLORED OIL AND COLORED POLYAMIDE FIBER**

(57) Disclosed are a liquid colored oil and a colored polyamide fiber. The liquid colored oil contains a colorant and a base oil agent. The base oil agent is a liquid at normal temperature and normal pressure, and a solubility parameter (SP) value thereof is 7.5 to 15.0. The colored polyamide fiber contains the aforementioned liquid colored oil. The liquid color oil can be stably added into polymers and dye them during the spinning process. The colored polyamide fiber has excellent spinning and dyeing properties.

**EP 4 357 494 A1**

**Description**

TECHNICAL FIELD

The present invention relates to a liquid colored oil and a colored polyamide fiber prepared from the liquid colored oil.

BACKGROUND

To give a variety of colors to products made of synthetic fibers, the following methods are usually used. (1) A colorant is made into high-concentration masterbatch, and then added in proportion as needed during the spinning process, but there is a problem of uneven color dispersion during spinning due to the difference in density of the masterbatch and a matrix polymer, resulting in easy formation of color unevenness on yarns and fabrics, which affects the product quality; and frequent color switching consumes a lot of slices and time, resulting in waste of raw materials and energy sources. In addition, it is very difficult to add colorants in the continuous polymerization and melt direct spinning process. (2) In the later stage, products can be dyed directly into various target colors, but a large amount of sewage will be produced to damage the environment.

In order to overcome the defects of the above two methods, a new method is proposed, in which a liquid colored oil is added in the spinning process, so that a fiber can be colored quickly.

The Chinese patent CN102702658A discloses liquid color masterbatch, which comprises: (a) a carrier, comprising an acrylamide liquid polymer; (b) a colorant; (c) a surfactant; and (d) a functional additive. However, the International Agency for Research on Cancer of the World Health Organization announced on October 27, 2017 that acrylamide was listed as a second-class carcinogen. Acrylamide liquids are likely to carcinogenicity.

The Chinese patent CN106978639A discloses a liquid colorant for polyester fiber dope coloring, which consists of a liquid dispersed phase, a colorant, a dispersant, etc., wherein the liquid dispersed phase is a mixture of a mineral oil and an aliphatic polyester. However, the liquid dispersed phase cannot be applied to nylon spinning due to polarity problems, resulting in a relatively narrow application range.

SUMMARY

An object of the present invention is to provide a liquid colored oil which can be stably added into polymers and dye them during a spinning process, and to provide a high-quality colored polyamide fiber obtained by adding the liquid colored oil.

The technical solution of the present invention is summarized as follows.

A liquid colored oil containing a colorant and a base oil agent, wherein the base oil agent is a liquid at normal temperature and normal pressure, and has a solubility parameter SP value of 7.5 to 15.0, preferably 8.0 to 13.0.

The base oil agent is preferably an aliphatic polyester formed by copolymerization of an aliphatic diacid with a total number of carbon atoms of 2 to 12 and an aliphatic diol with a total number of carbon atoms of 2 to 6; polyadipate is more preferably.

Preferably, the colorant accounts for 20 to 50wt% of the liquid colored oil.

Preferably, the colored oil also contains a polyurethane or polyester acid ammonium salt dispersant.

Preferably, the dispersant accounts for less than 15wt% of the weight of the liquid colored oil.

Preferably, the viscosity of the liquid colored oil is less than 5000 poises.

The present invention further discloses a colored polyamide fiber containing the above-mentioned liquid colored oil. Preferably, the colorant accounts for 0.10 to 5.00wt% of the weight of the fiber, the base oil agent accounts for 0.10 to 8.00wt% of the weight of the fiber, and the dispersant accounts for less than 1.000wt% of the weight of the fiber.

Preferably, the dispersion CV% of the colorant in the fiber is less than 0.3%.

The liquid colored oil of the present invention has good compatibility with a polyamide and has no impact on the spinning property of the polyamide. The colored polyamide fiber obtained by adding the liquid colored oil of the present invention has a good color tone, and its strength and elongation, fastness and other physical properties are basically not reduced compared with ordinary polyamide fibers. During the spinning process, rapid switching between various colors can be achieved.

DETAILED DESCRIPTION

A liquid colored oil of the present invention contains a colorant and a base oil agent, wherein the base oil agent is a liquid at normal temperature and normal pressure, and has a solubility parameter SP value of 7.5 to 15.0. If an SP value of the base oil agent is lower than 7.5 or higher than 15.0, that is, the polarity of the base oil agent is too low or too high, the base oil agent will be incompatible with a matrix polymer, and the base oil agent cannot be dispersed in the matrix polymer, eventually resulting in the inability to form filaments. In the present invention, it is preferred that the solubility parameter SP value of the base oil agent is 8.0 to 13.0.

Under the premise that the liquid colored oil is a liquid under normal temperature and normal pressure and has a solubility parameter SP value in the range of 7.5 to 15.0, the composition of the base oil agent is not specifically limited. The liquid colored oil may be a polymer oil agent, such as polyester, polyamide, or polyester; or may also be a low molecular organic matter, such as aliphatic carboxylic acid, or phosphate ester.

The normal temperature and normal pressure generally refer to a temperature of 20 to 30°C and a pressure of 101KPa. For polymers, a weight-average molecular weight of the base oil agent, which is a liquid at normal temperature and normal pressure, is generally less than 10,000. Therefore, when detecting whether the base oil agent is a liquid at normal temperature and normal pressure, it may also be determined according to its weight-average molecular weight.

Taking into account the cost of raw materials and the safety of use, in the enumerated base oil agent, the liquid colored oil of the present invention is preferably an aliphatic polyester, and more preferably an aliphatic polyester formed by the copolymerization of an aliphatic diacid with a total number of carbon atoms of 2 to 12 and an aliphatic diol with a total number of carbon atoms of 2 to 6.

The aliphatic diacid with a total number of carbon atoms of 2 to 12 may be a linear compound or has a branched chain; or may be a saturated aliphatic diacid or an unsaturated aliphatic diacid. If the total number of carbon atoms of the aliphatic acid is too large, the problem of excessively large viscosity or inability to maintain a liquid state is likely to occur after the formation of a polymer. Specifically, the aliphatic diacid may be 1,3-propane diacid, 1,4-succinic acid, 1,6-adipic acid, 2-methylsuccinic acid, 2,2-dimethyl succinic acid, 3-ethyladipic acid, etc., among which 1,6-adipic acid is preferred.

Listed examples of the aliphatic diol with a total number of carbon atoms of 2 to 6 may be ethylene glycol, 1-methylethylene glycol, 1,3-propanediol, 1,4-butanediol, etc., among which ethylene glycol is preferred.

In the aliphatic polyester formed from the above-mentioned aliphatic diacid and aliphatic diol as raw materials, the base oil agent of the present invention is preferably polyadipate, more preferably polyethylene glycol adipate.

The colorant of the present invention may be a pigment, a dye, or a matting agent. The pigment and dye may be carbon black, titanium dioxide, cadmium red, ultramarine blue, phthalocyanine green, phthalocyanine blue, permanent red, zinc yellow, Hansa yellow, TERATOP BLUE NFB GR, TERATOP RED NFR, TERATOP YELLOW NFG, TERASIL BLACK WW-KSN, etc. The matting agent may be a metallic soap (aluminum stearate, zinc stearate, calcium stearate, etc.), silica, titanium dioxide, etc.

Preferably, the colorant in the liquid colored oil accounts for 20 to 50wt% of the liquid colored oil. In a case that the same amount of colorant is added to the fiber, compared to a liquid colored oil with a large colorant concentration, a liquid colored oil with a small colorant concentration needs to be added in a larger amount, which will inevitably lead to the addition of more base oil agent. However, a large amount of base oil agent will cause increased cost, poor spinnability, and reduced fiber toughness. If the colorant concentration is too high, uneven dispersion of the colorant or loss of fluidity due to excessively large viscosity of the colored oil will be caused.

Nanoscale colorants accumulate a large amount of positive and negative charges on the surface due to their small size, large specific surface area, and surface energy. However, the irregular shape of nanoparticles also leads to charge aggregation and unstable states, so the particles tend to aggregate together and reach a stable state, thus forming agglomerates. The agglomerates generated by the colorant in the liquid colored oil cannot be disagglomerated again by adjusting the process during the spinning process, and the viscosity of the liquid colored oil increases during use, which reduces its supply performance, and blocks a spinning filter to cause the rise of a pack pressure, thereby resulting in a greatly reduced life of spinning pack, frequent yarn float and yarn break, reduced spinning operability, uneven fiber color tone, reduced product quality, and the like.

In addition to the agglomeration of nanoparticles caused by the spontaneous reduction of surface energy of the nanoparticles, some nanoparticles, such as titanium dioxide, are inevitably in contact with positive charges, such as ionized $H^+$ ions in water vapor, during storage and use because there are charges, which are distributed in layers and in which negative charge layers and positive charge layers are arranged alternately and the outermost layer is a negative charge layer, on the surface of the nanostructure. These positive charges will destroy positive and negative charge accumulation layers of nanoparticles, causing the nanoparticles to attract each other and cause agglomeration.

Thus, in order to avoid the agglomeration of the colorant, the liquid colored oil of the present invention further preferably contains a polyurethane or polyester acid ammonium salt dispersant. The dispersant may generate positive and negative charges. The positive charges generated by the dispersant are combined with opposite charges on the surface of the colorant to form a layer of protective film on the surface of the colorant particles, thereby reducing a solid/liquid interfacial tension to wet the surface of the colorant, and thus inhibiting the agglomeration of the colorant. In addition, an ester group or amide group in the dispersant forms hydrogen binding with an ester group, an amide group or an amino group in the base oil agent. Under the action of this hydrogen bond, the dispersant in the base oil agent can achieve good uniform dispersion and significantly reduce the viscosity of the liquid colored oil. In addition, molecules in the base oil agent can enter the colorant particles under the action of the dispersant to further increase the steric hindrance of the colorant particles and reducing the agglomeration, so that the colorant is evenly dispersed.

The polyurethane dispersant may be a polyurethane dispersant of which a terminal group is n-butanol, n-pentyl, n-hexyl, n-heptyl or n-octyl; the polyester acid ammonium salt dispersant may be a self-polymer formed by monomers such as N,N,N-trimethyl-p-formyl benzyl ammonium, monoester quaternary ammonium salt, diester quaternary ammonium salt, triester quaternary ammonium salt.

Preferably, the dispersant accounts for less than 15wt% of the liquid colored oil. If the content of the dispersant is too high, unnecessary cost increase will occur after the dispersion effect reaches saturation.

At the same time, the liquid colored oil may also contain various functional additives, such as an anti-ultraviolet additive, an antioxidant, a deodorant, an antistatic agent, a hydrophilizing agent, a hydrophobizing agent, an anti-wrinkle agent, a reinforcing agent, a flame retardant, etc.

In the preparation process of the colored fiber, the above-mentioned liquid colored oil is stably added to a matrix polymer polyamide through a slicing duct in front of a screw of a spinning machine, or a melt duct behind the screw of the spinning machine, or through a liquid addition pump in the continuous polymerization and melt direct spinning process, such that the colored polyamide fiber is prepared. According to the demand for fiber color and the content of the colorant in the liquid colored oil, an appropriate amount of liquid colored oil may be selected to be added.

For example, when preparing fully dull fibers, a liquid colored oil with titanium dioxide as the colorant is selected, and after adding the liquid color oil, the content of titanium dioxide in the fibers is within the range of 1.50 to 2.60wt%, achieving a fully dull effect; when preparing black fibers, liquid color oil with carbon black as the colorant can be selected. At this time, liquid colored oil can be added as much as possible without affecting the physical properties of the fibers; when preparing fibers of other colors, the appropriate amount of liquid color oil should be selected based on the demand for color depth and the content of colorants in the added liquid colored oil.

In the present invention, it is preferable that the colorant in the colored polyamide fiber accounts for 0.10 to 5.00wt% of the total weight of the fiber, the base oil agent accounts for 0.10 to 8.00% of the total weight of the fiber, and the dispersant accounts for less than 1.000% of the total weight of the fiber. If the colorant content in the colored polyamide fiber is too little, the color of the fiber will be light and cannot meet the color tone requirements; and if the colorant content is too much, the cost waste will be caused due to color saturation, and the colorant will become a foreign matter to affect the toughness of the fiber.

The base oil agent contained in the colored polyamide fiber only serves as a carrier for the colorant during the addition process, so that the colorant is evenly dispersed in the matrix polymer. After the fiber is formed, the base oil agent becomes a foreign matter to affect the spinning property and toughness of the fiber. Therefore, the content of the base oil agent should be as small as possible without affecting the dispersion effect of the colorant in the fiber. If the content of the base oil agent is too much, the spinning performance will be affected and the toughness of the fiber will be reduced, while the unnecessary raw material cost will be increased.

The dispersant aims to inhibit the agglomeration of the colorant, improve the dispersibility of the colorant in the base oil agent, and reduce the viscosity of the liquid colored oil. However, for the fiber, the dispersant may also become a foreign matter that affects the spinning property and physical properties, so the content of the dispersant in the fiber should be as small as possible without affecting the dispersion effect of the colorant in the liquid colored oil. If the content of the dispersant is too much, the spinning performance will be affected and the toughness of the fiber will be reduced, while the unnecessary raw material cost will be increased.

In the present invention, a coefficient of variation CV% of the colorant content in the fiber is used to characterize the dispersion uniformity of the colorant in the fiber. The smaller the CV% value, the more uniform the dispersion of the colorant. For ordinary pigments and dyes, since the content distribution measurement of the colorant is cumbersome, the coefficient of variation CV% of the color tone L* value of the fiber is used in the present invention to characterize the dispersion of the colorant in the fiber. In the fiber obtained by using the liquid colored oil containing the dispersant, the dispersion CV% of the colorant may be less than 0.3%.

The liquid colored oil of the present invention has good compatibility with a polyamide and has no effect on the spinning property of the polyamide. The colored fiber obtained by adding the liquid colored oil of the present invention has a good color tone, but the physical properties such as strength and elongation, fastness are basically not reduced compared with ordinary fibers. In addition, the liquid colored oil is evenly dispersed in the fiber, so color unevenness is hardly formed on the yarns and fabrics, with excellent color uniformity.

A test method involved in the present invention is described as follows:

(1) Viscosity of liquid colored oil
A Brookfield rotary viscometer (model DVNX) is used, with a rotor of the rotary viscometer being immersed in the liquid colored oil, and the viscosity of the liquid colored oil may be quantitatively tested by turning on this device.
(2) Content of colorant, dispersant and base oil agent in colored oil

A solvent with a weight ratio of 30 to 50wt% is added to a certain weight of liquid colored oil to obtain a mixed liquid. The mixed liquid is placed in an ultrasonic environment for ultrasonic treatment for 1 hour. The mixed liquid after ultrasonic treatment is centrifuged for separation (at a speed of 18000 rpm for 10 minutes) to obtain an upper liquid and a lower solid.

The solid portion is weighed to calculate the percentages of the colorant and the dispersant contained in the colored oil.

Nuclear magnetic resonance analysis (NMR), infrared testing analysis (IR), elemental analysis, and mass spectrometry-assisted analysis are used to analyze the structure and content of the colorant and the dispersant in solid components, and then calculate the concentrations of the colorant and the dispersant in the colored oil.

The obtained upper liquid is distilled under reduced pressure in a vacuum environment at 70°C for 24 hours to separate a solvent added to the colored oil, and the remainder is the base oil agent. The remaining base oil agent is weighed to calculate a weight ratio of the base oil agent in the liquid colored oil.

The organic solvent may be selected from commonly used organic solvents such as cyclohexane, acetone, and trichloromethane.

(3) Determination of molecular structure of base oil agent

An HT-PNMR12-9 nuclear magnetic resonance spectrometer (H, C system) from Huantong Nuclear Magnetic Company is used to carry out hydrogen nuclear magnetic resonance spectrum and carbon nuclear magnetic resonance spectrum scanning. Through the hydrogen spectrum and carbon spectrum results, the molecular structure of the base oil agent is determined in combination with the infrared testing analysis (IR), elemental analysis, and mass spectrometry-assisted analysis.

(4) Determination of molecular weight of base oil agent

The molecular weight of the base oil agent is determined using Gel Permeation Chromatography (GPC), a well-known method for determining the molecular weight of polymer materials in the industry.

(5) Solubility parameter SP (solubility parameter)

SP is a parameter that represents the structural characteristic of a substance and is used to characterize the interaction between molecules. The solubility parameter (SP) is theoretically defined as the square root of the material's cohesive energy density. In the present invention, a group contribution calculation method is used to calculate the solubility parameter. The solubility parameter is calculated based on the structure of the substance, which is called a molar group gravitational constant method. In this method, the chemical structure of the substance is divided into appropriate atoms or groups, and the combination of the cohesive energy and molar volume of each group is called a molar gravitational constant (F), having the additivity. The calculation method adopted in the present invention is a Hoy method among group contribution calculation methods.

$$\delta \ = \ \Sigma F_i / \Sigma V_i$$

wherein $\delta$ is the SP value; $F_i$ represents a molar gravitational constant of the group, with a unit of $J^{1/2} \cdot cm^{3/2} \cdot mol^{-1}$; and $V_i$ represents a molar volume of the group, with a unit of $cm^3 \cdot mol^{-1}$. The groups $F_i$ and $V_i$ required by the Hoy method may be easily obtained by simply consulting the data.

(6) Content of base oil agent in fiber

2g/L refining agent aqueous solution is used to wash the fiber at 80°C for 20 minutes to remove a surface spinning oil agent. A certain amount of washed fiber sample is weighed and sheared into pieces of about 1mm. A Soxhlet extraction method is used, and the sheared sample and a solvent (such as acetone) are added to a Soxhlet extractor to extract the base oil agent contained in the fiber. The base oil agent in the fiber is dissolved into the solvent during the extraction process. After 1 hour of extraction, the mixture of the solvent and the oil agent is taken out. A new solvent is added again for extraction and repeatedly extracted for three times. Acetone is removed by a Yarong RE-52CS/5299 rotary evaporator from the mixture of the solvent and the oil agent which is obtained by extracting for three times, so as to obtain the base oil agent contained in the fiber. A ratio of the weight of the extracted base oil agent to the weight of the initial fiber is the content of the base oil agent in the fiber.

(7) Content of colorant in fiber

Nuclear magnetic resonance analysis (NMR), infrared testing analysis (IR), elemental analysis, and mass spectrometry-assisted analysis are used to carry out structural analysis and quantitative analysis of the colorant in the fiber.

(8) Content of dispersant in fiber

Nuclear magnetic resonance analysis (NMR), infrared testing analysis (IR), elemental analysis, and mass spectrometry-assisted analysis are used to carry out structural analysis and quantitative analysis of the dispersant in the fiber.

(9) Filtration pressure difference

A filter with a pore size of 15 microns is used for production, with an output rate of 16g/min and an evaluation time of 12 hours. Whether the filter may be used is judged by determining whether the filtration pressure rises within 12 hours. If the filtration pressure does not rise at all within 12 hours, it is judged as ◎ (excellent); if the rise amplitude is less than 0.2MPa, it is judged as o (available); if the rise amplitude is 0.2 to 0.5MPa, it is judged as △ (barely available); and if the rise amplitude is greater than 0.5MPa, it is judged as × (unavailable).

(10) Spinning performance

Comprehensive evaluation is carried out by evaluating the contamination of spinning holes during the spinning process, the presence or absence of yarn resonance behind the spinning holes, the presence or absence of dropping materials, the presence or absence of monofilaments, the presence or absence of yarn break, as well as changes in fiber strength and elongation as well as physical properties. If there is no abnormality in the spinning process, it is indicated as ◎; in the spinning process, if there is no monofilament and almost no yarn break, it is indicated as o (the frequency of yarn break is less than 2 rounds/ton); in the spinning process, if there are no monofilaments but with occasional yarn break, it is indicated as △ (the frequency of yarn break is 3 to 5 rounds/ton); and if frequent breakage of filaments or inability to form filaments occurs during the spinning process, resulting in uncontinuous production results, it is indicated as × (the frequency of yarn break exceeds 5 rounds/ton).

(11) CV% of L* value of fiber

A Japanese-made SM-T45 colorimeter is used to test an L* value of a polyamide fiber sample. The L* value is an indicator of the apparent brightness of the sample, in a value range generally from 0 to 100. Higher L* value indicates that the sample tends to be brighter in appearance. A plurality of L* values is tested for the same sample at different time points, standard deviations (STD) between the respective L* values are calculated, and an arithmetic mean (AVG) of all L* values is divided by STD to calculate data indicated by a percentage, i.e., CV%. The lower the CV%, the better the color tone of the polyamide fiber, and the more uniform the dispersion of the colorant in the fiber.

$$CV\% = (STD/AVG) \times 100\%.$$

(12) CV% of $TiO_2$ content

A RIGUKU's ZSX PRIMUSIII+ X-ray fluorescence spectrometer is used to test the $TiO_2$ content in the fiber. A plurality of $TiO_2$ content values is tested for the same sample at different spinning time points, standard deviations (STD) between the respective content values are calculated, and STD is divided by an arithmetic mean (AVG) of all content values to calculate data indicated by a percentage, i.e., CV%. The lower the CV%, and the more uniform the dispersion of the titanium dioxide in the fiber.

$$CV\% = (STD/AVG) \times 100\%.$$

The following embodiments are used to illustrate the content of the present invention, but the present invention is not limited to the content listed in the embodiments.

EMBODIMENT 1

A polyamide is selected as a base polymer, and a liquid colored oil containing 50wt% of $TiO_2$ and 50wt% of polyethylene glycol adipate (PEGA, with a weight-average molecular weight of 500) with SP of 9.1 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure rises by 0.08MPa within 12 hours, and there is almost no yarn break during the spinning process. High viscosity of the liquid will lead to weak fluidity due to the viscosity problem although it does not affect the spinning. In the resulting polyamide fiber, $TiO_2$ accounts for 1.80wt% of the weight of the polyamide fiber, and the base oil agent accounts for 1.80wt% of the weight of the polyamide fiber. The content CV% of $TiO_2$ is 0.52%.

EMBODIMENT 2

A polyamide is selected as a base polymer, and a liquid colored oil containing 50wt% of $TiO_2$, 47wt% of polyethylene glycol adipate (PEGA, with a weight-average molecular weight of 1000) with SP of 9.1, and 3wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure does not rise within 12 hours, and there is no abnormalities in the spinning process. In the resulting polyamide fiber, $TiO_2$ accounts for 1.80wt% of the weight of the polyamide fiber, the base oil agent accounts for 1.69wt% of the weight of the polyamide fiber, and the dispersant accounts for 0.108wt% of the weight of the polyamide fiber. The content CV% of $TiO_2$ is 0.28%.

EMBODIMENT 3

A polyamide is selected as a base polymer, and a liquid colored oil containing 50wt% of $TiO_2$, 47wt% of polyethylene glycol adipate (PEGA, with a weight-average molecular weight of 1000) with SP of 9.1, and 3wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 0.20wt% relative to the polyamide fiber.

The filtration pressure does not rise within 12 hours, and there is no abnormalities in the spinning process. In the resulting polyamide fiber, $TiO_2$ accounts for 0.10wt% of the weight of the polyamide fiber, the base oil agent accounts for 0.09wt% of the weight of the polyamide fiber, and the dispersant accounts for 0.006wt% of the weight of the polyamide fiber. The content CV% of $TiO_2$ is 0.25%.

EMBODIMENT 4

A polyamide is selected as a base polymer, and a liquid colored oil containing 50wt% of $TiO_2$, 47wt% of polyethylene glycol adipate (PEGA, with a weight-average molecular weight of 1000) with SP of 9.1, and 3wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 5.00wt% relative to the polyamide fiber.

The filtration pressure does not rise within 12 hours, and there is no abnormalities in the spinning process. In the resulting polyamide fiber, $TiO_2$ accounts for 2.50wt% of the weight of the polyamide fiber, the base oil agent accounts for 2.35wt% of the weight of the polyamide fiber, and the dispersant accounts for 0.150wt% of the weight of the polyamide fiber. The content CV% of $TiO_2$ is 0.22%.

EMBODIMENT 5

A polyamide is selected as a base polymer, and a liquid colored oil containing 50wt% of $TiO_2$, 47wt% of polyethylene glycol adipate (PEGA, with a weight-average molecular weight of 1000) with SP of 9.1, and 3wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 0.10wt% relative to the polyamide fiber.

The filtration pressure does not rise within 12 hours, and there is no abnormalities in the spinning process. In the resulting polyamide fiber, $TiO_2$ accounts for 0.05wt% of the weight of the polyamide fiber, the base oil agent accounts for 0.05wt% of the weight of the polyamide fiber, and the dispersant accounts for 0.003wt% of the weight of the fiber. The content CV% of $TiO_2$ is 0.21%. A few additions of $TiO_2$ seems to be fine in terms of feasibility, but excessively low addition amount is not significant.

EMBODIMENT 6

A polyamide is selected as a base polymer, and a liquid colored oil containing 50wt% of $TiO_2$, 47wt% of polyethylene glycol adipate (PEGA, with a weight-average molecular weight of 1000) with SP of 9.1, and 3wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 10.00wt% relative to the polyamide fiber.

The filtration pressure does not rise within 12 hours, and yarn break occasionally occurs during the spinning process. In the resulting polyamide fiber, $TiO_2$ accounts for 5.00wt% of the weight of the polyamide fiber, the base oil agent accounts for 4.70wt% of the weight of the polyamide fiber, and the dispersant accounts for 0.300wt% of the weight of the fiber. The content CV% of $TiO_2$ is 0.24%.

EMBODIMENT 7

A polyamide is selected as a base polymer, and a liquid colored oil containing 50wt% of $TiO_2$, 42wt% of polyethylene glycol adipate (PEGA, with a weight-average molecular weight of 1000) with SP of 9.1, and 8wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure does not rise within 12 hours, and there is no abnormalities in the spinning process. In the resulting polyamide fiber, $TiO_2$ accounts for 1.80wt% of the weight of the polyamide fiber, the base oil agent accounts for 1.51wt% of the weight of the polyamide fiber, and the dispersant accounts for 0.288wt% of the weight of the fiber. The content CV% of $TiO_2$ is 0.23%.

EMBODIMENT 8

A polyamide is selected as a base polymer, and a liquid colored oil containing 50wt% of $TiO_2$, 40wt% of polyethylene glycol adipate (PEGA, with a weight average molecular weight of 1000) with SP of 9.1, and 10wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure does not rise within 12 hours, and there is no abnormalities in the spinning process. In the resulting polyamide fiber, $TiO_2$ accounts for 1.80wt% of the weight of the polyamide fiber, the base oil agent accounts for 1.44wt% of the weight of the polyamide fiber, and the dispersant accounts for 0.360wt% of the weight of the fiber. The content CV% of $TiO_2$ is 0.15%.

EMBODIMENT 9

A polyamide is selected as a base polymer, and a liquid colored oil containing 50wt% of $TiO_2$, 35wt% of polyethylene glycol adipate (PEGA, with a weight-average molecular weight of 1000) with SP of 9.1, and 15wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure rises by 0.16MPa within 12 hours, and there is almost no yarn break during the spinning process. In the resulting polyamide fiber, $TiO_2$ accounts for 1.80wt% of the weight of the polyamide fiber, the base oil agent accounts for 1.26wt% of the weight of the polyamide fiber, and the dispersant accounts for 0.540wt% of the weight of the fiber. The content CV% of $TiO_2$ is 0.13%.

EMBODIMENT 10

A polyamide is selected as a base polymer, and a liquid colored oil containing 50wt% of $TiO_2$, 32wt% of polyethylene glycol adipate (PEGA, with a weight-average molecular weight of 1000) with SP of 9.1, and 18wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
The filtration pressure rises by 0.3MPa within 12 hours, and yarn break occasionally occurs during the spinning process. In the resulting polyamide fiber, $TiO_2$ accounts for 1.80wt% of the weight of the polyamide fiber, the base oil agent accounts for 1.15wt% of the weight of the polyamide fiber, and the dispersant accounts for 0.648wt% of the weight of the fiber. The content CV% of $TiO_2$ is 0.14%.

EMBODIMENT 11

A polyamide is selected as a base polymer, and a liquid colored oil containing 30wt% of $TiO_2$ and 70wt% of polyethylene glycol adipate (PEGA, with a weight-average molecular weight of 1000) with SP of 9.1 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 6.00wt% relative to the polyamide fiber.
The filtration pressure rises by 0.11MPa within 12 hours, and there is almost no yarn break during the spinning process. In the resulting polyamide fiber, $TiO_2$ accounts for 1.80wt% of the weight of the polyamide fiber, and the base oil agent accounts for 4.20wt% of the weight of the polyamide fiber. The content CV% of $TiO_2$ is 0.32%.

EMBODIMENT 12

A polyamide is selected as a base polymer, and a liquid colored oil containing 50wt% of $TiO_2$, 47wt% of polyethylene glycol adipate (PEGA, with a weight average molecular weight of 2000) with SP of 9.1, and 3wt% of ammonium polyester dispersant, ammonium lauryl ether sulfate (ALES) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
The filtration pressure does not rise within 12 hours, and there is no abnormalities in the spinning process. In the resulting polyamide fiber, $TiO_2$ accounts for 1.80wt% of the weight of the polyamide fiber, the base oil agent accounts for 1.69wt% of the weight of the polyamide fiber, and the dispersant accounts for 0.108wt% of the weight of the fiber. The content CV% of $TiO_2$ is 0.29%.

EMBODIMENT 13

A polyamide is selected as a base polymer, and a liquid colored oil containing 50wt% of $TiO_2$ and 50wt% of polybutylene adipate (PBAG, with a weight-average molecular weight of 3000) with SP of 7.5 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
The filtration pressure rises by 0.1MPa within 12 hours, and there is almost no yarn break during the spinning process. In the resulting polyamide fiber, $TiO_2$ accounts for 1.80wt% of the weight of the polyamide fiber, and the base oil agent accounts for 1.80wt% of the weight of the polyamide fiber. The content CV% of $TiO_2$ is 0.46%.

EMBODIMENT 14

A polyamide is selected as a base polymer, and a liquid colored oil containing 50wt% of $TiO_2$ and 50wt% of pyromellitic acid (PMA, with a weight-average molecular weight of 250) with SP of 8.0 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure rises by 0.07MPa within 12 hours, with almost no yarn break and slight bending of the fibers at the spinneret. In the resulting polyamide fiber, $TiO_2$ accounts for 1.80wt% of the weight of the polyamide fiber, and the base oil agent accounts for 1.80wt% of the weight of the polyamide fiber. The content CV% of $TiO_2$ is 0.51%.

EMBODIMENT 15

A polyamide is selected as a base polymer, and a liquid colored oil containing 50wt% of $TiO_2$ and 50wt% of phosphate ester CR-733S (RDP, with a weight-average molecular weight of 3000) with SP of 10.5 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
The filtration pressure rises by 0.12MPa within 12 hours, and there is almost no yarn break during the spinning process. In the resulting polyamide fiber, $TiO_2$ accounts for 1.80wt% of the weight of the polyamide fiber, and the base oil agent accounts for 1.80wt% of the weight of the polyamide fiber. The content CV% of $TiO_2$ is 0.49%.

EMBODIMENT 16

A polyamide is selected as a base polymer, and a liquid colored oil containing 50wt% of $TiO_2$ and 50wt% of liquid polyamide oligomer (PA, with a weight-average molecular weight of 500) with SP of 13.0 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
The filtration pressure rises by 0.11MPa within 12 hours, and there is almost no yarn break during the spinning process. In the resulting polyamide fiber, $TiO_2$ accounts for 1.80wt% of the weight of the polyamide fiber, and the base oil agent accounts for 1.80wt% of the weight of the polyamide fiber. The content CV% of $TiO_2$ is 0.52%.

EMBODIMENT 17

A polyamide is selected as a base polymer, and a liquid colored oil containing 50wt% of $TiO_2$ and 50wt% of polyethylene glycol (PEG, with a weight-average molecular weight of 800) with SP of 15.0 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
The filtration pressure rises by 0.1MPa within 12 hours, but yarn break occasionally occurs during the spinning process. In the resulting polyamide fiber, $TiO_2$ accounts for 1.80wt% of the weight of the polyamide fiber, and the base oil agent accounts for 1.80wt% of the weight of the polyamide fiber. The content CV% of $TiO_2$ is 0.44%.

EMBODIMENT 18

A polyamide is selected as a base polymer, and a liquid colored oil containing 20wt% of carbon black and 80wt% of polyethylene glycol adipate (PEGA, with a weight-average molecular weight of 3000) with SP of 9.1 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 10.00wt% relative to the polyamide fiber.
The filtration pressure rises by 0.12MPa within 12 hours, and there is almost no yarn break during the spinning process. In the polyamide fiber, the carbon black accounts for 2.00wt% of the weight of the polyamide fiber, and the base oil agent accounts for 8.00wt% of the weight of the polyamide fiber. The CV% of color tone L* is 0.67%.

EMBODIMENT 19

A polyamide is selected as a base polymer, and a liquid colored oil containing 30wt% of red pigment (PigmentRED254) and 70wt% of polyethylene glycol adipate (PEGA, with a weight-average molecular weight of 10000) with SP of 9.1 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.30wt% relative to the polyamide fiber.
Finally, the filtration pressure rises by 0.15MPa within 12 hours, and there is almost no yarn break during the spinning process. In the resulting polyamide fiber, the pigment accounts for 1.00wt% of the weight of the polyamide fiber, and the base oil agent accounts for 2.31wt% of the weight of the polyamide fiber. The CV% of color tone L* is 0.62%.

EMBODIMENT 20

A polyamide is selected as a base polymer, and a liquid colored oil containing 30wt% of red pigment (PigmentRED254), 55wt% of polyethylene glycol adipate (PEGA, with a weight-average molecular weight of 5000) with SP of 9.1, and 15wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 6.67wt% relative to the polyamide fiber.
The filtration pressure does not rise at all within 12 hours, and there is almost no yarn break during the spinning process. In the resulting polyamide fiber, the pigment accounts for 2.00wt% of the weight of the polyamide fiber, the base oil agent accounts for 3.67wt% of the weight of the polyamide fiber, and the dispersant accounts for 1.000wt% of the weight of the polyamide fiber. The CV% of color tone L* is 0.22%.

EMBODIMENT 21

A polyamide is selected as a base polymer, and a liquid colored oil containing 15wt% of red pigment (PigmentRED254), 82wt% of polyethylene glycol adipate (PEGA, with a weight-average molecular weight of 8000) with SP of 9.1, and 3wt% of polyurethane dispersant polyethyleneimine (PEI) is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 6.67wt% relative to the polyamide fiber.
Finally, the filtration pressure does not rise at all within 12 hours, and yarn break occasionally occurs during the spinning process, but spinning is available. In the resulting polyamide fiber, the pigment accounts for 1.00wt% of the weight of the polyamide fiber, the base oil agent accounts for 5.47wt% of the weight of the polyamide fiber, and the dispersant accounts for 0.200wt% of the weight of the polyamide fiber. The CV% of color tone L* is 0.28%.

EMBODIMENT 22

A polyamide is selected as a base polymer, and a liquid colored oil containing 35wt% of blue dye (ReactiveBlue2) and 65wt% of polyethylene glycol adipate (PEGA, with a weight-average molecular weight of 1000) with SP of 9.1 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 2.90wt% relative to the polyamide fiber.
Finally, the filtration pressure rises by 0.15MPa within 12 hours, and there is almost no yarn break during the spinning process, but spinning is available. In the resulting polyamide fiber, the pigment accounts for 1.00wt% of the weight of the polyamide fiber, and the base oil agent accounts for 1.88wt% of the weight of the polyamide fiber. The CV% of color tone L* is 0.55%.

Comparative example 1

A polyamide is selected as a base polymer, and a liquid colored oil containing 50wt% of $TiO_2$ and 50wt% of ethylene glycol (EG, with a weight-average molecular weight of 62) with SP of 16.3 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.
Finally, the filtration pressure rises by 0.14MPa within 12 hours, but there are a large number of yarn float and yarn break during the spinning process, so spinning fails.

Comparative example 2

A polyamide is selected as a base polymer, and a liquid colored oil containing 50wt% of $TiO_2$ and 50wt% of diisopropyl ether (DE, with a weight-average molecular weight of 102) with SP of 6.9 is continuously and stably fed into a spinning machine through a liquid adding device located above a screw of the spinning machine and evenly mixed and molten with nylon, and spun filaments are ejected through a spinneret, and further post-processed to obtain a polyamide fiber. The addition amount of the liquid colored oil is 3.60wt% relative to the polyamide fiber.

The filtration pressure rises by 0.12MPa within 12 hours, but there are a large number of yarn float and yarn break during the spinning process, so spinning fails.

Comparative example 3

A polyamide is selected as a base polymer, and color masterbatch is polyamide masterbatch slices with a carbon black content of 20%. The polyamide slices are added to a first bin of a spinning machine, and carbon black masterbatch is added to a second bin. The first bin and the second bin are quantified through respective slice metering equipment and merged into a mixer. After being stirred and mixed by the mixer, the mixture enters a screw of the spinning machine. After being melted, sheared, and transported by the screw, spun filaments are finally ejected through a spinneret to obtain a black polyamide fiber. The addition amount of the black masterbatch is 10.0wt% relative to the polyamide fiber.

The filtration pressure rises by 0.5MPa within 12 hours, but yarn break occasionally occurs during the spinning process. The pigment in the fiber accounts for 2.00wt% of the weight of the polyamide fiber, and the CV% of the color tone L* is 1.3%.

Table 1

| Item | Liquid colored oil | | | | | | | | Polyamide colored fiber | | | | | | | |
| | Base oil agent | | | Dispersant | | Colorant | | Viscosity (Poise) | Colored oil addition amount (wt%) | Colorant content (wt%) | Base oil content (wt%) | Dispersant content (wt%) | CV (%) | | Filtration pressure difference | Spinning performance |
| | Type | SP | Concentration (wt%) | Type | Concentration (wt%) | Type | Concentration (wt%) | | | | | | TiO₂ | L* value | | |
| Embodiment 1 | PEGA | 9.1 | 50 | - | - | TiO₂ | 50 | 8000 | 3.60 | 1.80 | 1.80 | - | 0.52 | - | ○ | ○ |
| Embodiment 2 | PEGA | 9.1 | 47 | PEI | 3 | TiO₂ | 50 | 4400 | 3.60 | 1.80 | 1.69 | 0.108 | 0.28 | - | ◎ | ◎ |
| Embodiment 3 | PEGA | 9.1 | 47 | PEI | 3 | TiO₂ | 50 | 4400 | 0.20 | 0.10 | 0.09 | 0.006 | 0.25 | - | ◎ | ◎ |
| Embodiment 4 | PEGA | 9.1 | 47 | PEI | 3 | TiO₂ | 50 | 4400 | 5.00 | 2.50 | 2.35 | 0.150 | 0.22 | - | ◎ | ◎ |
| Embodiment 5 | PEGA | 9.1 | 47 | PEI | 3 | TiO₂ | 50 | 4400 | 0.10 | 0.05 | 0.05 | 0.003 | 0.21 | - | ◎ | ◎ |
| Embodiment 6 | PEGA | 9.1 | 47 | PEI | 3 | TiO₂ | 50 | 4400 | 10.00 | 5.00 | 4.70 | 0.300 | 0.24 | - | ◎ | Δ |
| Embodiment 7 | PEGA | 9.1 | 42 | PEI | 8 | TiO₂ | 50 | 3000 | 3.60 | 1.80 | 1.51 | 0.288 | 0.23 | - | ◎ | ◎ |
| Embodiment 8 | PEGA | 9.1 | 40 | PEI | 10 | TiO₂ | 50 | 2500 | 3.60 | 1.80 | 1.44 | 0.360 | 0.15 | - | ◎ | ◎ |
| Embodiment 9 | PEGA | 9.1 | 35 | PEI | 15 | TiO₂ | 50 | 1900 | 3.60 | 1.80 | 1.26 | 0.540 | 0.13 | - | ○ | ○ |
| Embodiment 10 | PEGA | 9.1 | 32 | PEI | 18 | TiO₂ | 50 | 1300 | 3.60 | 1.80 | 1.15 | 0.648 | 0.14 | - | Δ | Δ |
| Embodiment 11 | PEGA | 9.1 | 70 | - | - | TiO₂ | 30 | 9500 | 6.00 | 1.80 | 4.20 | - | 0.32 | - | ○ | ○ |
| Embodiment 12 | PEGA | 9.1 | 47 | ALES | 3 | TiO₂ | 50 | 4300 | 3.60 | 1.80 | 1.69 | 0.108 | 0.29 | - | ◎ | ◎ |

EP 4 357 494 A1

(continued)

| Item | Liquid colored oil | | | | | | | | | Polyamide colored fiber | | | | | | |
|---|---|---|---|---|---|---|---|---|---|---|---|---|---|---|---|---|
| | Base oil agent | | | Dispersant | | Colorant | | Viscosi-ty (Poise) | Colored oil addi-tion amount (wt%) | Colorant content (wt%) | Base oil content (wt%) | Disper-sant con-tent (wt%) | CV (%) | | Filtration pressure dif-ference | Spinning per-formance |
| | Type | SP | Concentra-tion (wt%) | Type | Concentra-tion (wt%) | Type | Concentra-tion (wt%) | | | | | | $TiO_2$ | L* val-ue | | |
| Embodi-ment 13 | PBAG | 7.5 | 50 | - | - | $TiO_2$ | 50 | 4350 | 3.60 | 1.80 | 1.80 | - | 0.46 | - | ○ | ○ |

14

Table 2

| Item | Liquid colored oil | | | | | | | | | Polyamide colored fiber | | | | | | | |
| | Base oil agent | | | Dispersant | | Colorant | | Viscosity (Poise) | Colored oil addition amount (wt%) | Colorant content (wt%) | Base oil content (wt%) | Dispersant Content (wt%) | CV (%) | | Filtration pressure difference | Spinning performance |
| | Type | SP | Concentration (wt%) | Type | Concentration (wt%) | Type | Concentration (wt%) | | | | | | TiO$_2$ | L*value | | |
|---|---|---|---|---|---|---|---|---|---|---|---|---|---|---|---|---|
| Embodiment 14 | PMA | 8.0 | 50 | - | - | TiO$_2$ | 50 | 8200 | 3.60 | 1.80 | 1.80 | - | 0.51 | - | ○ | ○ |
| Embodiment 15 | RDP | 10.5 | 50 | - | - | TiO$_2$ | 50 | 8150 | 3.60 | 1.80 | 1.80 | - | 0.49 | - | ○ | ○ |
| Embodiment 16 | PA | 13.0 | 50 | - | - | TiO$_2$ | 50 | 8000 | 3.60 | 1.80 | 1.80 | - | 0.52 | - | ○ | ○ |
| Embodiment 17 | PEG | 15.0 | 50 | - | - | TiO$_2$ | 50 | 8200 | 3.60 | 1.80 | 1.80 | - | 0.44 | - | ○ | △ |
| Embodiment 18 | PEGA | 9.1 | 80 | - | - | Carbon black | 20 | 7000 | 10.00 | 2.00 | 8.00 | - | - | 0.67 | ○ | ○ |
| Embodiment 19 | PEGA | 9.1 | 70 | - | - | PigmentRed254 | 30 | 6500 | 3.30 | 1.00 | 2.31 | - | - | 0.62 | ○ | ○ |
| Embodiment 20 | PEGA | 9.1 | 55 | PEI | 15 | PigmentRed254 | 30 | 2200 | 6. 67 | 2.00 | 3.67 | 1.000 | - | 0.22 | ◎ | ○ |
| Embodiment 21 | PEGA | 9.1 | 82 | PEI | 3 | PigmentRed254 | 15 | 4000 | 6.67 | 1.00 | 5.47 | 0.200 | - | 0.28 | ◎ | △ |
| Embodiment 22 | PEGA | 9.1 | 65 | - | - | Reactive Blue2 | 35 | 6200 | 2.90 | 1.00 | 1.88 | - | - | 0.55 | ○ | ○ |
| Comparative example 1 | EG | 16.3 | 50 | - | - | TiO$_2$ | 50 | 15000 | 3.60 | 1.80 | 1.80 | - | - | - | ○ | × |
| Comparative example 2 | DE | 6.9 | 50 | - | - | TiO$_2$ | 50 | 22000 | 3.60 | 1.80 | 1.80 | - | - | - | ○ | × |

| Item | Liquid colored oil | | | | | | | | | Polyamide colored fiber | | | | | | | |
|---|---|---|---|---|---|---|---|---|---|---|---|---|---|---|---|---|---|
| | Base oil agent | | | Dispersant | | Colorant | | Viscosi-ty (Poise) | Color-ed oil addi-tion amount (wt%) | Color-ant con-tent (wt%) | Base oil con-tent (wt%) | Disper-sant Con-tent (wt%) | CV (%) | | Filtration pressure dif-ference | Spinning perform-ance |
| | Type | SP | Concentra-tion (wt%) | Type | Concentra-tion (wt%) | Type | Concentra-tion (wt%) | | | | | | TiO$_2$ | L* val-ue | | |
| Compara-tive exam-ple 3 | Nylon black masterbatch slices with carbon black concentration of 20% | | | | | | | Solid | - | 2.00 | - | - | - | 1.30 | Δ | Δ |

**Claims**

1. A liquid colored oil, containing a colorant and a base oil agent, wherein the base oil agent is a liquid at normal temperature and normal pressure, and a solubility parameter (SP) value thereof is 7.5 to 15.0.

2. The liquid colored oil according to claim 1, wherein the solubility parameter SP value of the base oil agent is 8.0 to 13.0.

3. The liquid colored oil according to claim 1 or 2, wherein the base oil agent is an aliphatic polyester formed by copolymerization of an aliphatic diacid with a total of 2 to 12 carbon atoms and an aliphatic diol with a total of 2 to 6 carbon atoms.

4. The liquid colored oil according to claim 3, wherein the base oil agent is polyadipate.

5. The liquid colored oil according to claim 1 or 2, wherein the colorant accounts for 20 to 50wt% of the liquid colored oil.

6. The liquid colored oil according to claim 1, wherein the colored oil contains a polyurethane or polyester acid ammonium salt dispersant.

7. The liquid colored oil according to claim 6, wherein the dispersant accounts for less than 15wt% of the liquid colored oil.

8. The liquid colored oil according to claim 6 or 7, wherein the viscosity of the liquid colored oil is less than 5000 poises.

9. A colored polyamide fiber, containing the liquid colored oil according to claim 1.

10. The colored polyamide fiber according to claim 9, wherein the colorant accounts for 0.10 to 5.00wt% of the weight of the fiber.

11. The colored polyamide fiber according to claim 9 or 10, wherein the base oil agent accounts for 0.10 to 8.00% of the weight of the fiber.

12. The colored polyamide fiber according to claim 9 or 10, wherein the dispersant accounts for less than 1.000% of the weight of the fiber.

13. The colored polyamide fiber according to claim 12, wherein the dispersion CV% of the colorant in the fiber is less than 0.3%.

## INTERNATIONAL SEARCH REPORT

International application No.

**PCT/CN2022/098534**

**A.    CLASSIFICATION OF SUBJECT MATTER**

D01F 1/04(2006.01)i;   D01F 1/06(2006.01)i;   D01F 1/10(2006.01)i;   D01F 6/90(2006.01)i

According to International Patent Classification (IPC) or to both national classification and IPC

**B.    FIELDS SEARCHED**

Minimum documentation searched (classification system followed by classification symbols)

D01F; D06M

Documentation searched other than minimum documentation to the extent that such documents are included in the fields searched

Electronic data base consulted during the international search (name of data base and, where practicable, search terms used)

CNKI, CNABS, CNTXT, VEN, DWPI, ISI_WEB OF SCIENCE: 东丽, 色油, 液体 W 着色剂, 液态 W 着色剂, 液体 W 色料, 液态 W 色料, 液体 W 色母料, 液态 W 色母料, 聚酰胺, 尼龙, PA, 锦纶, 溶解度参数, 液体聚酯, 液态聚酯, mass w colouring, Liq. w colouring, liquid w colouring, liquid w colourant, Liq. w colourant, liquid w pigment, Liq. w pigment, polyamide+, polyamide, capron

**C.    DOCUMENTS CONSIDERED TO BE RELEVANT**

| Category* | Citation of document, with indication, where appropriate, of the relevant passages | Relevant to claim No. |
|---|---|---|
| X | US 5194090 A (TEIJIN LTD.) 16 March 1993 (1993-03-16)<br>column 6 lines 38-42 and column 7 lines 1-6, column 2 line 62-column 3 line 22 | 1-5, 9-13 |
| X | JP 6045689 A (TOYO INK SEIZO K.K.) 12 March 1985 (1985-03-12)<br>description, page 2 left bottom column line 10-right bottom line 15, and embodiment 1 | 1-5 |
| X | US 4639272 A (TOYO INK SEIZO K.K. et al.) 27 January 1987 (1987-01-27)<br>embodiment 1 and claims 10-11 | 1-5 |
| A | JP 05140499 A (TEIJIN LTD.) 08 June 1993 (1993-06-08)<br>entire document | 1-13 |
| A | JP 08165453 A (TEIJIN LTD.) 25 June 1996 (1996-06-25)<br>entire document | 1-13 |
| A | CN 106978639 A (SUZHOU SUNMUN TECHNOLOGY CO., LTD.) 25 July 2017 (2017-07-25)<br>entire document | 1-13 |
| A | US 5106905 A (NIPPON ESTER CO., LTD. et al.) 21 April 1992 (1992-04-21)<br>entire document | 1-13 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 June 2022** | **08 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098534**

| Patent document cited in search report | | | Publication date (day/month/year) | Patent family member(s) | | | Publication date (day/month/year) |
|---|---|---|---|---|---|---|---|
| US | 5194090 | A | 16 March 1993 | JP | H0450265 | A | 19 February 1992 |
| | | | | JP | 2585841 | B2 | 26 February 1997 |
| JP | 6045689 | A | 12 March 1985 | JP | H062990 | B2 | 12 January 1994 |
| US | 4639272 | A | 27 January 1987 | JP | S619453 | A | 17 January 1986 |
| | | | | JP | S6357465 | B2 | 11 November 1988 |
| JP | 05140499 | A | 08 June 1993 | JP | 3000570 | B2 | 17 January 2000 |
| JP | 08165453 | A | 25 June 1996 | | None | | |
| CN | 106978639 | A | 25 July 2017 | CN | 106978639 | B | 08 March 2019 |
| US | 5106905 | A | 21 April 1992 | KR | 880006418 | A | 22 July 1988 |
| | | | | EP | 0266754 | A2 | 11 May 1988 |
| | | | | EP | 0266754 | A3 | 22 February 1989 |
| | | | | KR | 910001688 | B1 | 18 March 1991 |
| | | | | JP | S63117071 | A | 21 May 1988 |
| | | | | JP | S63120767 | A | 25 May 1988 |
| | | | | JP | H01118678 | A | 11 May 1989 |
| | | | | JP | H0573146 | B2 | 13 October 1993 |
| | | | | JP | H0653856 | B2 | 20 July 1994 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102702658 A

- CN 106978639 A